(19) Europäisches Patentamt
European Patent Office
Office européen des brevets

(11) **EP 2 859 380 B1**

(12) **FASCICULE DE BREVET EUROPEEN**

(45) Date de publication et mention de la délivrance du brevet:
**19.08.2020 Bulletin 2020/34**

(21) Numéro de dépôt: **13729676.0**

(22) Date de dépôt: **11.06.2013**

(51) Int Cl.:
*G01T 1/169* (2006.01)  *G01T 7/00* (2006.01)

(86) Numéro de dépôt international:
**PCT/EP2013/062065**

(87) Numéro de publication internationale:
**WO 2013/186231 (19.12.2013 Gazette 2013/51)**

(54) **PROCÉDÉ DE CARTOGRAPHIE EN TEMPS RÉEL D'UNE DISTRIBUTION DE PHOTONS DANS UN SITE**

VERFAHREN ZUR ECHTZEIT-ABBILDUNG EINER VERTEILUNG VON PHOTONEN AN EINEM ORT

METHOD OF REAL-TIME MAPPING OF A DISTRIBUTION OF PHOTONS IN A SITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.06.2012 FR 1255484**

(43) Date de publication de la demande:
**15.04.2015 Bulletin 2015/16**

(73) Titulaire: **Institut de Radioprotection et de Sûreté Nucléaire**
**92260 Fontenay aux Roses (FR)**

(72) Inventeurs:
• **PANZA, Fabien**
**75012 Paris (FR)**
• **GURRIARAN, Rodolfo**
**91140 Villebon-sur-Yvette (FR)**

(74) Mandataire: **Regimbeau**
**20, rue de Chazelles**
**75847 Paris Cedex 17 (FR)**

(56) Documents cités:
WO-A2-2005/022197    US-A- 5 936 240
US-A1- 2004 037 394    US-A1- 2011 246 137

**Description**

DOMAINE DE L'INVENTION

L'invention concerne le domaine de l'acquisition et du traitement de données spectrométriques, pour la réalisation d'une cartographie de la probabilité de présence d'une source de photons en un site en temps réel, c'est-à-dire au fur et à mesure de l'acquisition des données spectrométriques et ceci pour des sources de toute nature (minerai, pollution, sources scellées).

L'invention s'applique notamment aux rayonnements radioactifs (rayons gamma), mais également aux rayonnements de type infrarouge ou rayons X à aider l'opérateur à orienter la prise de mesures radioactives sur des zones de plus forts intérêts.

ETAT DE LA TECHNIQUE

On connait déjà l'utilisation de détecteurs de rayonnements ionisants, tels des détecteurs de rayonnements électromagnétiques (photons gamma ou X), pour localiser une source de rayonnement présente en surface ou en profondeur d'un espace ouvert.

Il est notamment connu de quadriller un espace ouvert avec un tel détecteur mobile, monté sur un chariot ou sur un engin aéroporté. Le détecteur acquiert, en une pluralité de points de mesure régulièrement répartis, un spectre de rayonnement gamma émis par une source d'émission de photon présente dans le sol, comprenant à la fois un taux de comptage photons, et l'énergie desdits photons.

Ces données sont représentatives, dans le cas d'une source radioactive, respectivement du nombre de désexcitations d'un noyau atomique, et de l'espèce atomique dudit noyau.

Cependant, cette méthode implique de réaliser des mesures systématiques sur l'ensemble du site, ce qui nécessite de réaliser autant de mesures au niveau des zones où se trouve la source qu'au niveau où il n'y a pas de source.

Par conséquent la prise de mesure sera longue, et l'efficacité de cette prise de mesures n'est pas optimale. En effet, certaines des mesures ne sont pas pertinentes pour étudier la source (notamment les mesures réalisées sur des zones où il n'y a pas de source), et le nombre de mesures au-dessus de la source peut ne pas être suffisant pour rendre l'activité de cette source avec suffisamment de précision.

Pour pallier ce problème certains outils de cartographie de la radioactivité utilisent des méthodes de géostatistique (telle que le Krigeage), pour lesquelles un traitement des données est mis en oeuvre après avoir fini une série de mesures plus courte, afin de localiser les zones de plus forts intérêts.

D'autres mesures sont mises en oeuvre ensuite sur les zones de plus fort intérêt, pour affiner la caractérisation du site étudié.

Ces méthodes statistiques ne permettent cependant pas d'obtenir en temps réel des données sur la source d'émission de photons.

D'autre part, les méthodes existantes sont imprécises, car les photons détectés ne proviennent pas tous de la zone du sol située à l'aplomb du détecteur. En effet, certains rayons gamma sont émis à la surface vers d'autres directions que la normale à celle-ci.

Par conséquent, certains photons détectés en un point de mesure peuvent provenir d'une zone voisine dudit point, ce qui fausse les informations déduites de la mesure en ce point.

Pour pallier ce problème, certains systèmes de détection, comprenant un chariot mobile et un détecteur monté sur ledit chariot, comportent en outre une cage blindée dans laquelle est placé le détecteur. Cette cage permet de collimater le détecteur et empêche donc la détection de photons ne provenant pas de la zone située à l'aplomb du point de mesure où se situe le détecteur.

Cependant, l'utilisation de cette cage implique de ne prendre en compte qu'une part restreinte des photons provenant de la source. Il en résulte une perte d'information significative sur le nombre total de photons pris en compte pour l'analyse de la source. US 2004/037394 décrit un procédé de cartographie connu.

PRESENTATION DE L'INVENTION

L'invention a pour but de pallier le problème mentionné ci-avant, en indiquant en temps réel sur une représentation cartographique la zone où une source d'émission de photons a le plus de chance de se trouver.

Plus particulièrement, un but de l'invention est de rendre la prise de mesures plus efficace, en orientant l'opérateur durant celle-ci pour déterminer avec une précision et une rapidité accrues l'emplacement de ladite source.

A cet égard, l'invention a pour objet un procédé de cartographie en temps réel d'une distribution de présence d'une source de photons en un site selon la revendication 1.

Avantageusement, mais facultativement, l'invention peut en outre comprendre au moins l'une des caractéristiques suivantes :

- la bande d'énergie déterminée est centrée sur une raie d'énergie caractéristique d'une espèce atomique de la source de photons.
- la fonction de réponse du détecteur est établie en fonction de sa géométrie et de son efficacité de détection.
- le pourcentage du flux de photons associé à un pixel est déterminé à partir de pourcentages du flux de photons mesuré associés à des couronnes centrées sur le point de mesure et présentant une intersection avec le pixel.
- l'étape de corrélation comprend le calcul, pour chaque pixel du site représenté dans plusieurs matrices modélisées à partir de plusieurs points de mesure, d'une moyenne des valeurs des distributions de provenances de photons associées audit pixel en fonction du nombre de fois où le pixel est représenté dans une matrice.
- la moyenne des valeurs des distributions de provenances des photons en un pixel est pondérée en fonction desdites valeurs.

L'invention concerne en outre un système de détection de rayonnement radioactif selon la revendication 7.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1a illustre schématiquement un système de détection pour la mise en oeuvre du procédé selon l'invention,
- La figure 1b représente schématiquement un détecteur de rayonnement utilisé dans un tel système,
- La figure 2a représente schématiquement la répartition de photons détectés en fonction de leur provenance par rapport au détecteur.
- La figure 2b représente la probabilité de provenance d'un photon en fonction de son angle d'incidence par rapport au détecteur
- La figure 3a représente la distribution cumulée des provenances des photons d'un flux détecté par rapport au sol,
- La figure 3b représente la distribution des provenances des photons d'un flux détecté,
- La figure 4 représente les principales étapes d'un mode de mise en oeuvre du procédé selon l'invention,
- La figure 5a représente une modélisation en trois dimensions d'une distribution de provenances de photons autour d'un détecteur,
- La figure 5b représente un pixel de la modélisation,
- Les figures 6a à 6h représentent la réalisation progressive d'une cartographie par mise en oeuvre du procédé.

DESCRIPTION DETAILLEE D'AU MOINS UN MODE DE MISE EN ŒUVRE

*Système de détection*

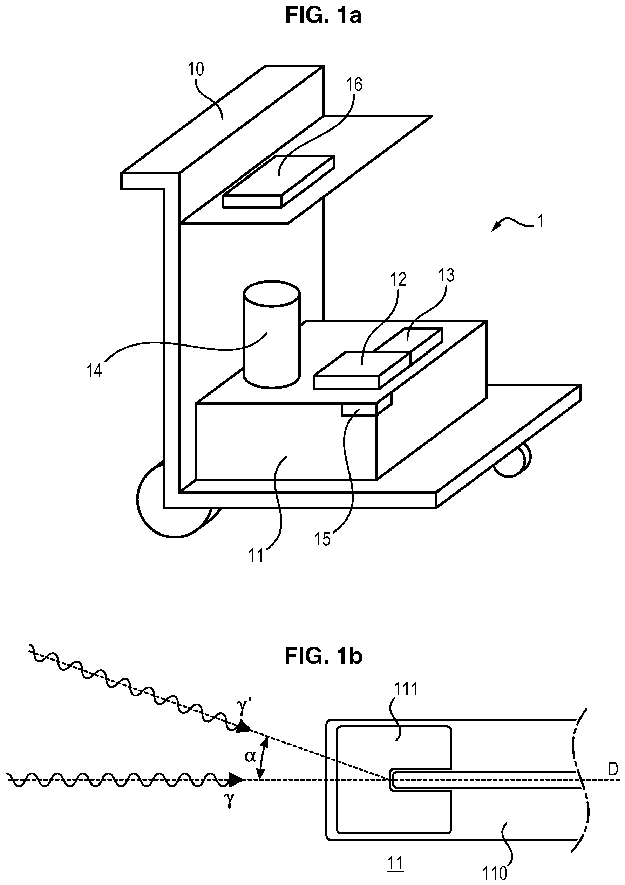

En référence à la figure 1a, on utilise un système de détection mobile 1, comprenant un chariot mobile 10, sur lequel est monté un détecteur 11 de rayonnement. Ce détecteur 11 est de préférence un détecteur de rayons gamma de type spectromètre semi-conducteur au germanium, présentant un cristal de détection dont l'axe de symétrie est orienté perpendiculairement au sol et dans la direction de celui-ci.

Par ailleurs, le détecteur n'est pas collimaté, de sorte qu'il peut détecter des photons provenant de la surface avec une ouverture de détection de 180° ou $2\pi$ stéradians.

Le cas échéant, ce détecteur 11 est refroidi par une unité de refroidissement 14, qui peut être un réservoir d'azote liquide ou un système cryo-électrique de refroidissement fonctionnant par effet Peltier.

Le système 1 comprend en outre une unité de calcul et de traitement 12, et une mémoire 13 connectée à ladite unité. Le détecteur est pourvu d'une interface 15 lui permettant de transmettre des données à l'unité de calcul et de traitement.

Le système 1 comprend un dispositif de positionnement 16, par exemple un système de géopositionnement par satellite (GPS), connecté à l'unité de calcul et de traitement, pour associer aux données spectrométriques acquises en un point de mesure les coordonnées géographiques dudit point.

*Principe physique*

Sur la figure 1b, on a représenté schématiquement un détecteur de rayonnements 11. Ce détecteur comporte une matrice de cellules de détections 111 disposée dans une chambre 110 sous vide par laquelle transitent les rayons gamma avant d'être détectés.

Comme visible sur cette figure, l'efficacité de détection dépend d'une efficacité intrinsèque du détecteur et de la géométrie du détecteur.

Plus particulièrement, pour un détecteur donné, l'efficacité du détecteur s'écrit comme suit :

$$\frac{N_f}{A} = \frac{N_f}{N_0}.\frac{N_0}{\Phi}.\frac{\Phi}{A}$$

$N_f$ correspond au taux de comptage de photons dans la bande d'énergie considérée, en coups/s, et A est l'activité de la source en Becquerel.

Le terme $\frac{\Phi}{A}$ correspond à la distribution angulaire du flux de photons, qui dépend uniquement de la distribution des radionucléides dans le sol.

Pour des rayons gamma provenant d'une direction D parallèle à la l'axe de symétrie de la matrice 110 de cellules de détection, une proportion $N_0/\Phi$ de photons est détectée par rapport au flux axial incident, cette proportion correspondant à l'efficacité intrinsèque du détecteur.

En revanche, si des rayons gamma y' parviennent au détecteur selon une autre direction, formant un angle $\alpha$ non nul avec la direction D, l'efficacité de détection change (en fonction de la valeur de l'angle $\alpha$ et des caractéristiques géométriques du détecteur). A cet égard, le terme $N_f/N_0$ traduit la variation du terme $N_0/\Phi$ en fonction de l'angle d'incidence du flux de photons par rapport à un flux incident axial.

On déduit de ces observations que, pour un nombre de photons gamma détectés en un point de mesure, une proportion seulement provient de la zone située dans la direction de mesure du détecteur, et une autre proportion provient de zones adjacentes au point de mesure.

L'équation de l'efficacité du détecteur étant fonction de l'angle que fait le flux de rayonnement avec l'axe de symétrie de la matrice de détection, il est possible de déterminer la part des événements détectés en fonction de l'angle de provenance des photons.

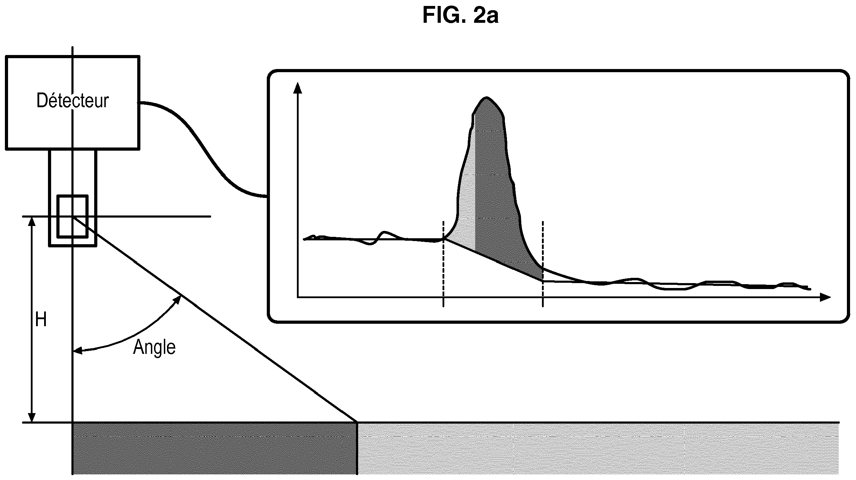

A cet égard, la figure 2a représente de façon schématique la part des événements provenant d'une position déterminée par rapport au détecteur (zone sombre) par rapport à l'ensemble des événements du pic.

La part des événements provenant au maximum d'un angle $\theta$ autour du détecteur s'écrit :

$$G(r) = \frac{N_f(0 \to \theta)}{N_f\left(0 \to \frac{\pi}{2}\right)} = \frac{\frac{N_f}{N_0}(0 \to \theta).\frac{\Phi}{A}(0 \to \theta)}{\frac{N_f}{N_0}\left(0 \to \frac{\pi}{2}\right).\frac{\Phi}{A}\left(0 \to \frac{\pi}{2}\right)}$$

Avec $\theta = \tan^{-1}\left(\frac{r}{h}\right)$ où r est le rayon en mètres au sol autour du détecteur et h la hauteur du détecteur par rapport au sol.

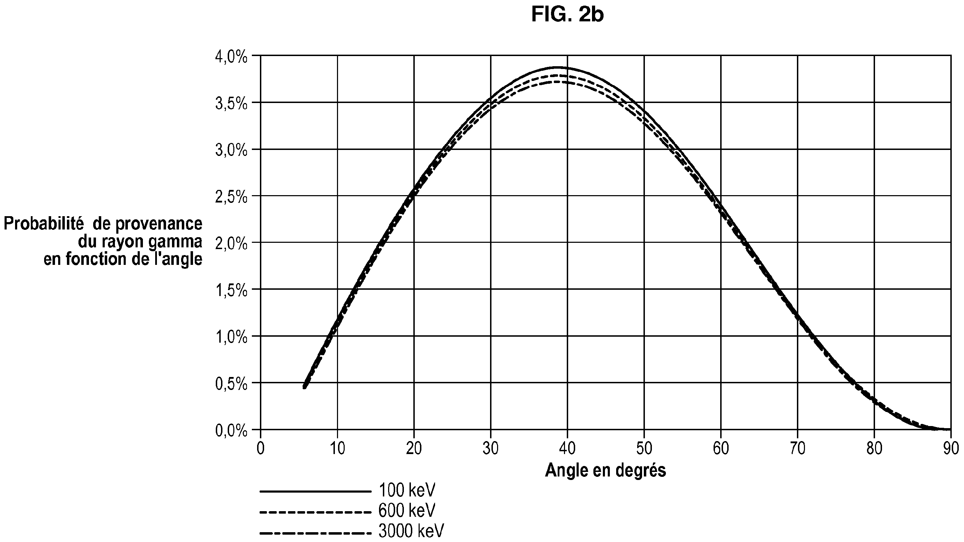

On peut donc établir, en un point de mesure pour lequel une certaine quantité de photons sont détectés, à partir de la fonction d'efficacité du détecteur, une probabilité de provenance d'un photon en fonction de son angle d'incidence, comme représenté en figure 2b.

Trois courbes sont représentées dans cette figure, chacune correspondant à une énergie de détection de photons (respectivement 100 keV, 600 keV et 3000 keV), ces courbes ayant été modélisées pour une distribution homogène de radionucléides dans le sol et avec un détecteur situé à 1 m au-dessus du sol.

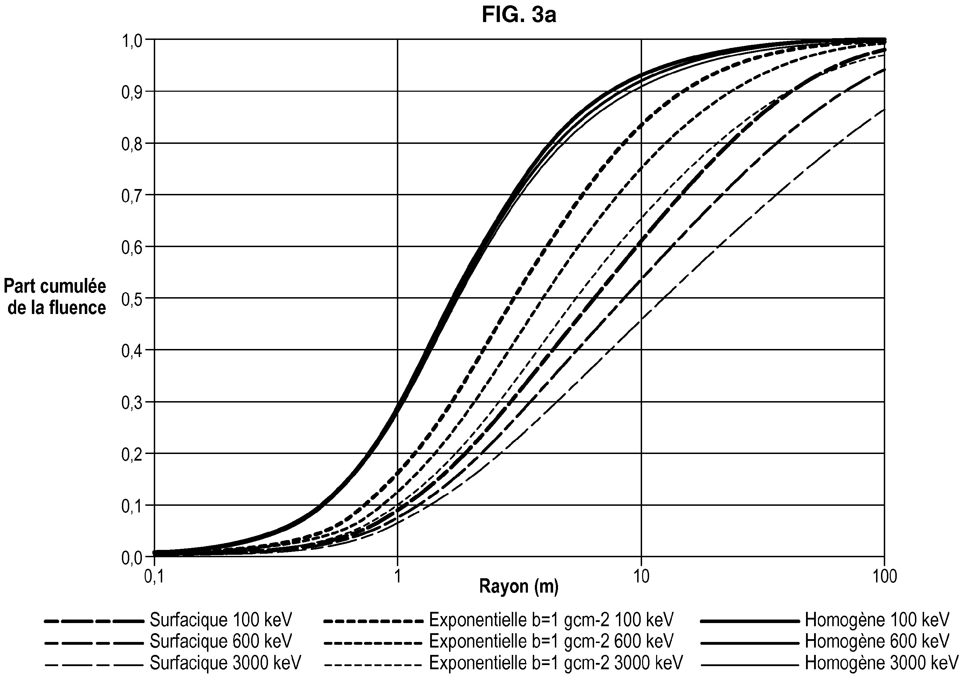

En référence à la figure 3a, on a représenté les pourcentages cumulés d'événements (nombre de photons) par rapport au nombre total d'événements détectés, en fonction de provenances possibles des photons. La provenance des photons est donnée par la distance r au sol du point de provenance des photons par rapport au détecteur.

Sur la figure, plusieurs courbes ont été réalisées, pour différentes distributions de radionucléides dans le sol, et pour différentes valeurs d'énergie. A chaque fois, le détecteur est à un mètre au-dessus du sol.

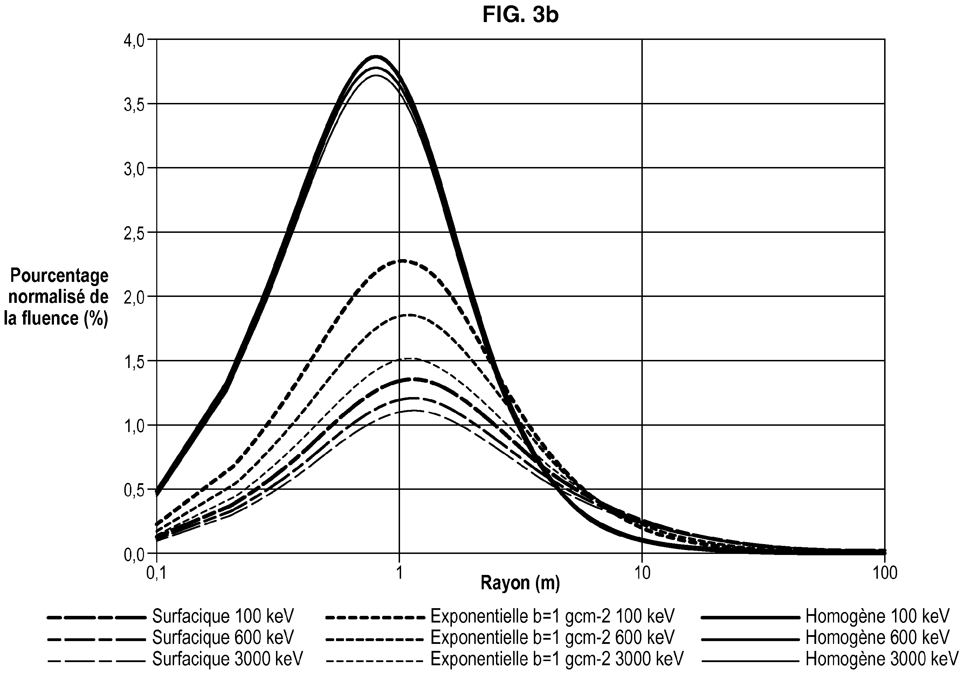

La figure 3b représente les mêmes pourcentages non cumulés d'événements par rapport au nombre total d'événements détectés que la figure 2b, en fonction de la provenance des photons en distance au niveau du sol par rapport au détecteur.

Cette distribution est modélisée par le pourcentage de photons par rapport au flux total de photons provenant de couronnes de taille croissante, centrées sur le détecteur, de rayon externe $R_e$ et de rayon interne $R_i$. Le pourcentage de photons provenant d'une couronne donnée s'exprime par l'équation :

$$F(Re) = G(Re) - G(Ri)$$

La figure 3b montre qu'un événement enregistré par le détecteur a une probabilité maximale de provenir d'une émission de photon se situant à un mètre autour du détecteur, si la distribution de la source dans le sol est exponentielle (avec un détecteur à un mètre au-dessus du sol et un coefficient de masse de relaxation égal à 1g.cm$^{-2}$).

Cette modélisation en couronne fournit donc, pour un taux de comptage de photons donné, la proportion possible de photons provenant d'une distance donnée entre le point du sol duquel ils proviennent et le détecteur.

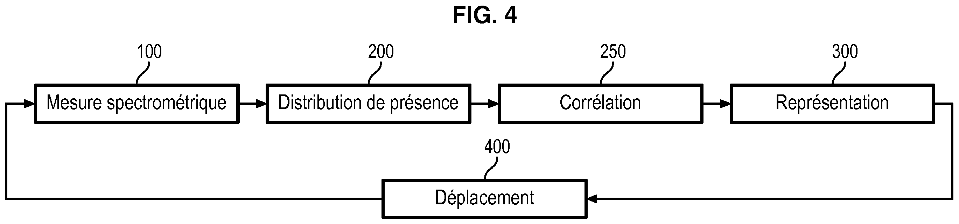

Le principe décrit ci-avant est mis en oeuvre dans le procédé selon l'invention, dont les principales étapes sont indiquées en figure 4.

Au cours d'une première étape 100, on procède à l'acquisition, en un point de mesure, de données spectrométriques. Ces données comprennent un histogramme en énergie attribuant à chaque énergie d'un spectre déterminé un nombre de photons gamma correspondant pour le temps de la mesure.

L'énergie d'un rayon gamma peut indiquer s'il a été diffusé ou non, au cours de ce trajet entre la source et le détecteur, et il indique en outre la nature de l'espèce atomique à l'origine de l'émission de ce rayon.

Par exemple, dans le cas d'une source radioactive, le photon est caractéristique d'une raie d'émission de photons d'une espèce atomique déterminée. Un photon gamma présentant une énergie de 661,6 keV provient de la désintégration d'un atome de Césium 137.

Par conséquent, au cours de cette étape 100, on sélectionne du nombre total de photons détectés une portion de photons dans une bande d'énergie donnée, afin de n'analyser la présence que d'une seule espèce.

Cette étape 100 comprend en outre l'acquisition de données relatives au positionnement du système 1 de détection, grâce au dispositif de positionnement 13.

Le détecteur 11 transmet les données mesurées à l'unité de calcul 12 via l'interface 15.

Ensuite, au cours d'une étape 200, l'unité de calcul et de traitement 12 établit une distribution des provenances possibles des photons en fonction de la distance entre le détecteur et un point du sol d'où ils peuvent provenir, la distribution étant du type représenté en figure 3b.

Pour ce faire, on utilise, en fonction de paramètres connus du détecteur, d'hypothèses sur la nature du sol et sur la répartition de la source d'émission de photons dans le sol, des abaques préalablement réalisées pour ces paramètres.

A ce stade, la distribution de provenances des photons est donc calculée en couronnes successives centrées sur le détecteur, comme décrit ci-avant.

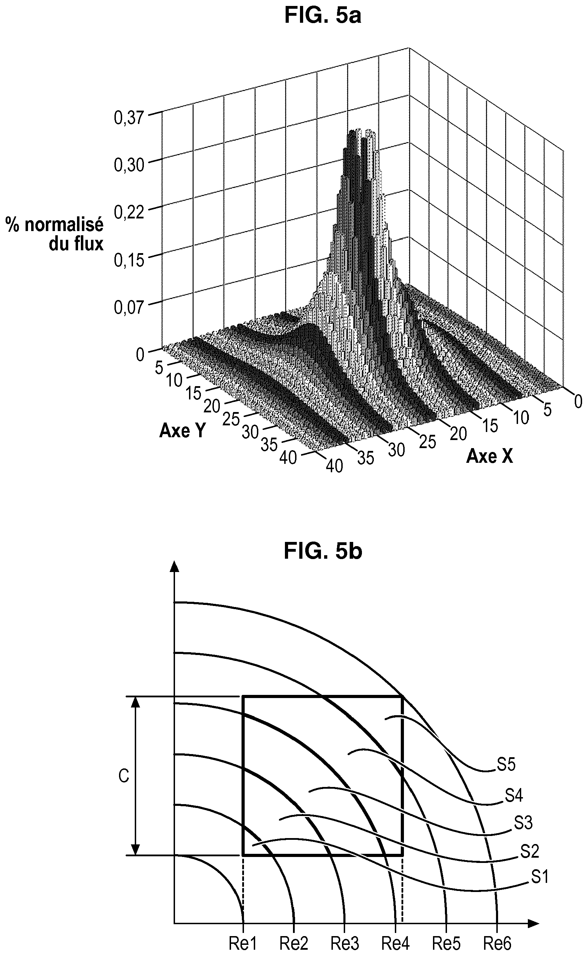

L'unité de calcul génère ensuite, en référence à la figure 5a, une cartographie en trois dimensions représentant le pourcentage de photons du flux détectés provenant de points situés autour du détecteur.

Pour ce faire, l'unité de calcul génère une matrice dont chaque élément représente un pixel du sol de taille déterminée. Par exemple, chaque pixel peut représenter une surface de 0,25 m$^2$.

Or, en référence à la figure 5b, le pourcentage du flux de photons provenant d'un pixel (i,j) se calcule à partir de la modélisation précédente en couronne. Chaque pixel présente une intersection avec plusieurs couronnes, et le pourcentage du flux de photons provenant du pixel est la moyenne des pourcentages du flux provenant des intersections entre ces couronnes et le pixel.

La pondération est réalisée en fonction de la surface d'intersection entre une couronne et le pixel :

$$H(i,j) = \frac{1}{C^2} \cdot \sum_{l=0}^{l_{max}(i,j)} S_l . F(Re_l)$$

Où

H(i,j) est la valeur de la probabilité de provenance d'un photon du pixel (i,j),

C est la taille d'un côté d'un pixel,

$S_i$ est la surface d'intersection entre la couronne I de rayon extérieur $Re_i$ et le pixel (i,j),

$l_{max}$ (i ; j) est le nombre de couronnes présentant une intersection avec le pixel (i ;j), et

$F(Re_l)$ est le pourcentage normalisé du flux d'une couronne de rayon extérieur $Re_l$ et de rayon intérieur $Re_{l-1}$, toutes les couronnes présentant une épaisseur e = $Re_l$-$Re_{l-1}$ égale (en mètres), ce pourcentage étant déduit des mesures du détecteur.

La surface C$^2$ d'un pixel est donc égale à :

$$C^2 = \sum_{l=0}^{l_{max}(i,j)} S_l$$

Et le nombre de couronnes inscrites dans le pixel (i,j) se calcule comme suit :

$$l_{max}(i;j) = E\left[\frac{\sqrt{((i+1).C)^2 + ((j+1).C)^2}}{e}\right] - E\left[\frac{\sqrt{(i.C)^2 + (j.C)^2}}{e}\right]$$

Où E[x] désigne la fonction partie entière.

Les surfaces d'intersection entre les couronnes et les pixels sont, quant à elles calculées avec la méthode d'intégration numérique par trapèzes.

On obtient ainsi la matrice de la figure 5a représentant la distribution des provenances possibles des photons (l'estimation relative des pourcentages du flux de photons en chaque point par rapport au flux total détecté) autour du détecteur, pixel par pixel.

De retour à la figure 4, on projette ensuite cette matrice sur une carte représentant le site à cartographier, au cours d'une étape 300 à partir de la position géographique du point de mesure qui a été acquise au moment de la mesure. Cette représentation indique une distribution de provenances possibles de photons, autour du point de mesure au niveau duquel se situe le détecteur. A chaque pixel est associée une probabilité de quantité de photons détectés provenant de ce point.

Cette représentation indique donc une distribution de provenance possible d'une source du site, cette source étant l'origine des flux de photons détectés et analysés.

Au cours d'une étape 400, l'opérateur déplace le système de détection en un point de mesure adjacent au premier et réitère les étapes 100 de mesure, et 200 de calcul d'une distribution de provenance de photons autour du détecteur.

En outre, avant l'étape 300 de représentation sur la carte, l'unité de calcul 12 effectue une corrélation, au cours d'une étape 250, des données obtenues au cours des mesures successives.

Cette corrélation est mise en oeuvre en moyennant, en chaque pixel de la carte, les valeurs des distributions de provenances possibles des photons détectés provenant de ce pixel, en fonction du nombre de mesures précédentes qui ont affecté ce pixel.

Cette moyenne peut également être pondérée par les valeurs des distributions de provenances de photons aux pixels, car comme visible en figure 3a, plus cette valeur est importante en un point, et plus la mesure de la valeur de la distribution de provenances des photons en ce point est précise.

De ce fait, à l'étape de représentation 300, non seulement la probabilité de provenance de photons détectés pour différents points du site est représentée, compte-tenu du taux de comptage mesuré en un ou plusieurs points de mesure précédents, mais encore cette probabilité est actualisée en fonction du taux de comptage mesuré au point de mesure courant.

On obtient donc en temps réel une cartographie de distribution de provenances de photons détectés en surface du site, cette cartographie correspondant à une distribution de présence d'une source dans le site. Cette cartographie est mise à jour au fur et à mesure des déplacements d'un opérateur sur le terrain ; elle permet donc de fournir en temps réel à l'opérateur des indications sur l'emplacement d'une source à l'origine des photons détectés, et même de le guider vers cette source.

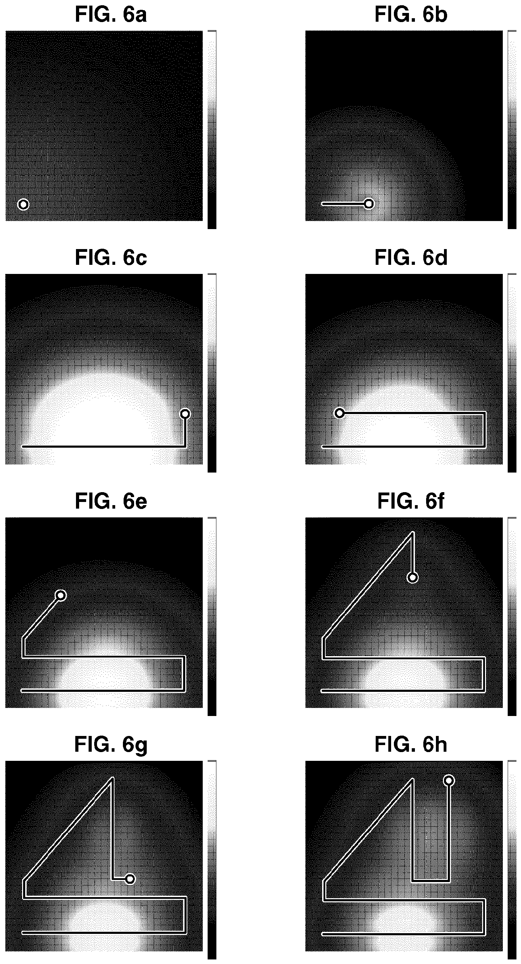

En référence aux figures 6a à 6h, on a représenté l'évolution du résultat de la mise en oeuvre du procédé dans un site, en fonction du déplacement d'un opérateur sur le site. Plus une zone est claire, et plus la valeur de la distribution de provenances des photons (la probabilité de provenance des photons) en cette zone est importante.

On remarque notamment que la cartographie est réalisée progressivement, et qu'elle est corrigée au fur et à mesure du déplacement de l'opérateur.

**Revendications**

1. Procédé de cartographie en temps réel d'une distribution de présence d'une source de photons en un site, le procédé comprenant les étapes consistant à mesurer (100), en une pluralité de points de mesure, un flux de photons dans une bande d'énergie déterminée avec un détecteur spectrométrique non collimaté, et relever les coordonnées géographiques dudit point, et en chaque point de mesure,

- à partir d'une fonction d'efficacité du détecteur spectrométrique, dépendant d'une efficacité intrinsèque du détecteur et d'informations sur la nature du site, établir une distribution (200) de provenances possibles des photons détectés autour du point de mesure, ladite distribution étant établie pour une matrice centrée sur le point de mesure, dans laquelle des éléments de la matrice correspondent à des pixels du site d'une taille déterminée,
un pourcentage du flux de photons mesuré au point de mesure étant associé à chaque élément de la matrice en fonction de la distance entre le pixel correspondant et le point de mesure,
- représenter (300) sur une carte du site ladite distribution de provenances possibles de photons, ladite représentation comprenant la modélisation de la matrice centrée sur le point de mesure et la projection de la matrice sur la carte du site,

le procédé comportant en outre, pour chaque point de mesure à partir du deuxième, une étape (250) préalable à l'étape de représentation (300), au cours de laquelle on corrèle les distributions de provenances des photons autour du point de mesure courant avec celles de points de mesure précédents.

2. Procédé selon la revendication 1, dans lequel la bande d'énergie déterminée est centrée sur une raie d'énergie caractéristique d'une espèce atomique de la source de photons.

3. Procédé selon l'une des revendications 1 ou 2, dans lequel la fonction d'efficacité du détecteur est établie en fonction de sa géométrie et de son efficacité intrinsèque.

4. Procédé selon l'une des revendications 1 à 3, dans lequel le pourcentage du flux de photons associé à un pixel est déterminé à partir de pourcentages du flux de photons mesuré associés à des couronnes centrées sur le point de mesure et présentant une intersection avec le pixel.

5. Procédé selon la revendication 4, dans lequel l'étape de corrélation comprend le calcul, pour chaque pixel du site représenté dans plusieurs matrices modélisées à partir de plusieurs points de mesure, d'une moyenne des valeurs de distributions de provenances de photons associées audit pixel en fonction du nombre de fois où le pixel est représenté dans une matrice.

6. Procédé selon la revendication 5, dans lequel la moyenne des valeurs des distributions de provenances des photons est pondérée en un pixel en fonction desdites valeurs.

7. Système de détection de rayonnement radioactif pour la mise en oeuvre du procédé selon l'une des revendications précédentes, le système comprenant :

- un chariot mobile (10), adapté pour être déplacé dans un site,
- un détecteur de rayonnement (11) non collimaté, monté sur ledit chariot, adapté pour mesurer en une pluralité de points de mesure des données spectrométriques,
- une unité de calcul et de traitement (12),
- un dispositif de positionnement (16), et
- une mémoire (13) en communication avec l'unité de calcul et de traitement, le système étant **caractérisé en ce que** :
- le détecteur de rayonnement (11) est adapté pour transmettre les données spectrométriques à l'unité de calcul et de traitement, et
- ladite unité (12) est adaptée pour, à partir des données, modéliser, en fonction des données spectrométriques mesurées, une distribution de provenances possibles de photons autour d'un point de mesure, ladite distribution étant établie pour une matrice centrée sur le point de mesure, des éléments de la matrice correspondant à des pixels du site d'une taille déterminée, ladite unité étant configurée pour associer un pourcentage du flux de photons mesuré à chaque élément de la matrice en fonction de la distance entre le pixel correspondant et le point de mesure,
- ladite unité est en outre adaptée pour corréler les distributions de provenances de photons pour plusieurs points de mesure, et pour représenter sur une carte du site une distribution de provenances possibles de photons.

**Patentansprüche**

1. Kartographieverfahren in Echtzeit einer Präsenzverteilung einer Photonenquelle in einem Standort, wobei das Verfahren die Schritte umfasst, bestehend im Messen (100), eines Photonenstroms in einer Vielzahl von Messpunkten, in einem Energieband, das mit einem nicht kollimierten spektrometrischen Detektor bestimmt wird, und Erfassen der geographischen Koordinaten des genannten Punktes in jedem der Messpunkte,

   - ausgehend von einer Effizienzfunktion des spektrometrischen Detektors in Abhängigkeit von einer intrinsischen Effizienz des Detektors und Informationen über die Art des Standortes, Erstellen einer Verteilung (200) von einer jeweiligen möglichen Herkunft der um den Messpunkt detektierten Photonen, wobei die genannte Verteilung für eine Matrix erstellt wird, die auf dem Messpunkt zentriert ist, in der die Elemente der Matrix Pixeln des Standortes einer bestimmten Größe entsprechen,

   wobei ein Prozentsatz des am Messpunkt gemessenen Photonenstroms jedem Element der Matrix in Abhängigkeit von der Entfernung zwischen dem entsprechenden Pixel und dem Messpunkt zugeordnet ist,

   - Darstellen (300) der genannten Verteilung der jeweiligen möglichen Herkunft von Photonen auf einer Karte des Standortes, wobei die genannte Darstellung die Modellgestaltung der auf dem Messpunkt zentrierten Matrix und die Projektion der Matrix auf die Karte des Standortes umfasst,

   wobei das Verfahren darüber hinaus für jeden Messpunkt ausgehend von dem zweiten einen Schritt (250) vor dem Darstellungsschritt (300) umfasst, in dessen Verlauf die Verteilungen der jeweiligen Herkunft der Photonen um den laufenden Messpunkt mit denen von vorherigen Messpunkten korreliert werden.

2. Verfahren gemäß Anspruch 1, bei dem das bestimmte Energieband auf einem Energiestrahl zentriert wird, der für eine atomare Sorte der Photonenquelle charakteristisch ist.

3. Verfahren gemäß einem der Ansprüche 1 oder 2, bei dem die Effizienzfunktion des Detektors in Abhängigkeit von seiner Geometrie und seiner intrinsischen Effizienz erstellt wird.

4. Verfahren gemäß einem der Ansprüche 1 bis 3, bei dem der einem Pixel zugeordnete Prozentsatz des Photonenstroms ausgehend von dem Prozentsatz des gemessenen Photonenstroms bestimmt wird, die Kronen zugeordnet werden, die auf dem Messpunkt zentriert werden und eine Überschneidung mit dem Pixel aufweisen.

5. Verfahren gemäß Anspruch 4, bei dem der Korrelationsschritt die Berechnung eines Durchschnitts der Verteilungswerte von Photonen, die dem genannten Pixel in Abhängigkeit von der Anzahl der Male zugeordnet wird, bei denen das Pixel in einer Matrix dargestellt wird, für jedes Pixel des dargestellten Standortes in mehreren als Modell dargestellten Matrizen ausgehend von mehreren Messpunkten umfasst.

6. Verfahren gemäß Anspruch 5, bei dem der Durchschnitt der Werte der jeweiligen Verteilung von den Photonen in einem Pixel in Abhängigkeit von den genannten Photonen gewichtet wird.

7. Detektionssystem der radioaktiven Strahlung für die Umsetzung des Verfahrens gemäß einem der voranstehenden Ansprüche, wobei das System umfasst:

   - einen mobilen Wagen (10) der zum Versetzen an einem Standort geeignet ist,
   - einen nicht kollimierten Strahlungsdetektor (11), der auf dem genannten Wagen montiert und geeignet ist, um eine Vielzahl von Messpunkten der spektrometrischen Daten zu messen,
   - eine Berechnungs- und Verarbeitungseinheit (12),
   - eine Positionierungsvorrichtung (16) und
   - einen Speicher (13) in Verbindung mit der Berechnungs- und Verarbeitungseinheit, wobei das System **dadurch gekennzeichnet ist, dass**:
   - der Strahlungsdetektor (11) zum Übertragen der spektrometrischen Daten auf die Berechnungs- und Verarbeitungseinheit geeignet ist, und
   - wobei die genannte Einheit (12) geeignet ist, um ausgehend von den Daten und in Abhängigkeit von den gemessenen spektrometrischen Daten eine Verteilung der jeweiligen möglichen Herkunft von Photonen um einen Messpunkt als Modell zu gestalten, wobei die genannte Verteilung für eine auf dem Messpunkt zentrierte Matrix erstellt ist, wobei Elemente des Matrix Pixeln des Standortes einer bestimmten Größe entsprechen, wobei die genannte Einheit ausgestaltet ist, um einen Prozentsatz des Photonenstroms zuzuordnen, der an jedem Element der Matrix in Abhängigkeit von der Entfernung zwischen dem entsprechenden Pixel und dem Messpunkt gemessen ist,
- wobei die genannte Einheit darüber hinaus geeignet ist, um die Verteilungen der jeweiligen Herkunft von Photonen für mehrere Messpunkte zu korrelieren und um auf einer Karte des Standortes eine Verteilung der jeweiligen möglichen Photonen darzustellen.

**Claims**

1. A real time mapping method for a presence distribution of a photon source at a site, the method comprising the steps of measuring (100), at a plurality of measurement points, a photon flux in a determined energy band with a non-collimated spectrometric detector, and recording the geographical coordinates of said point, and at each measurement point,

   - from an efficiency function of the spectrometric detector, depending on an intrinsic efficiency of the detector and information about the nature of the site, establishing a distribution (200) of possible origins of photons detected around the measurement point, said distribution being established for a matrix centred on the measurement point, wherein elements of the matrix correspond to pixels of the site of a determined size,

   a percentage of the photon flux measured at the measurement point being associated with each element of the matrix as a function of the distance between the corresponding pixel and the measurement point,

   - representing (300) on a site map said distribution of possible origins of photons, said representation comprising modelling the matrix centred on the measurement point and projecting the matrix on the site map,

   the method further including, for each measurement point from the second one, a step (250) prior to the representation step (300) during which distributions of origins of the photons around the current measurement point are correlated with those of previous measurement points.

2. The method according to claim 1, wherein the determined energy band is centred on an energy line characteristic of an atomic species of the photon source.

3. The method according to one of claims 1 or 2, wherein the efficiency function of the detector is established as a function of its geometry and its intrinsic efficiency.

4. The method according to one of claims 1 to 3, wherein the percentage of the photon flux associated with a pixel is determined from percentages of the measured photon flux which are associated with crowns centred on the measurement point and having an intersection with the pixel.

5. The method according to claim 4, wherein the correlation step comprises calculating, for each pixel of the site represented in several matrices modeled from several measurement points, an average of values of distributions of photon origins associated with said pixel as a function of the number of times the pixel is represented in a matrix.

6. The method according to claim 5, wherein the average of the values of the distributions of photon origins is weighted at a pixel as a function of said values.

7. A radioactive radiation detection system for implementing the method according to one of the preceding claims, the system comprising:

   - a movable carriage (10), adapted to be moved in a site,
   - a non-collimated radiation detector (11), mounted to said carriage, adapted to measure spectrometric data at a plurality of measurement points,
   - a calculating and processing unit (12),
   - a positioning device (16), and
   - a memory (13) in communication with the calculating and processing unit,

   the system being **characterised in that**:

- the radiation detector (11) is adapted to transmit spectrometric data to the calculating and processing unit, and
- said unit (12) is adapted to model, from the data and as a function of the measured spectrometric data, a distribution of possible origins of photons around a measurement point, said distribution being established for a matrix centred on the measurement point, elements of the matrix corresponding to pixels of the site of a determined size, said unit being configured to associate a percentage of the measured photon flux with each element of the matrix as a function of the distance between the corresponding pixel and the measurement point,
- said unit is further adapted to correlate distributions of photon origins for several measurement points, and represent a distribution of possible origins of photons on a site map.

## FIG. 1a

## FIG. 1b

FIG. 2a

## FIG. 2b

Probabilité de provenance du rayon gamma en fonction de l'angle

Angle en degrés

——————— 100 keV
- - - - - - - 600 keV
—-—-—-— 3000 keV

EP 2 859 380 B1

## FIG. 3a

Part cumulée de la fluence — Rayon (m)

- Surfacique 100 keV
- Surfacique 600 keV
- Surfacique 3000 keV
- Exponentielle b=1 gcm-2 100 keV
- Exponentielle b=1 gcm-2 600 keV
- Exponentielle b=1 gcm-2 3000 keV
- Homogène 100 keV
- Homogène 600 keV
- Homogène 3000 keV

EP 2 859 380 B1

FIG. 3b

Pourcentage normalisé de la fluence (%)

Rayon (m)

Surfacique 100 keV — — — — Exponentielle b=1 gcm-2 100 keV ———— Homogène 100 keV
Surfacique 600 keV — — — — Exponentielle b=1 gcm-2 600 keV ———— Homogène 600 keV
Surfacique 3000 keV — — — — Exponentielle b=1 gcm-2 3000 keV ———— Homogène 3000 keV

EP 2 859 380 B1

**FIG. 4**

```
┌─────────────────────┐    ┌─────────────────────┐    ┌─────────────────────┐    ┌─────────────────────┐
│ Mesure spectrométrique │──▶│ Distribution de présence │──▶│     Corrélation      │──▶│    Représentation    │
└─────────────────────┘    └─────────────────────┘    └─────────────────────┘    └─────────────────────┘
        100                        200                        250                        300
```

400

Déplacement

EP 2 859 380 B1

## FIG. 5a

## FIG. 5b

**FIG. 6a**

**FIG. 6b**

**FIG. 6c**

**FIG. 6d**

**FIG. 6e**

**FIG. 6f**

**FIG. 6g**

**FIG. 6h**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004037394 A